# EUROPEAN PATENT APPLICATION

(11) **EP 3 567 282 A1**
(43) Date of publication of application: **13.11.2019**
(21) Application number: 19164384.0
(22) Date of filing: 21.03.2019
(51) Int. Cl.: F16H 57/04, B64C 27/12

(54) **USE OF METERING HOLE IN SHROUD OF SPLASH-LUBRICATED GEARBOX FOR DISBURSING LUBRICANT WITHIN GEARBOX**

(30) Priority: 10.05.2018 US 201815976025
(71) Applicant: Bell Helicopter Textron Inc., Fort Worth, TX 76101 (US)
(72) Inventor: POSTER, Scott David, Arlington, TX 76016 (US); KILMAIN, Charles J., North Richland Hills, TX 76180 (US)
(74) Representative: Barker Brettell LLP

(57) **Abstract**

The present invention includes a method of lubricating a gearbox (300), including moving a lubricant (320) from the gearbox (300) into a gear shroud (310a, 310b) via a flow-metering orifice (315a, 315b) in the gear shroud (310a, 310b); and distributing the lubricant (320) within the gearbox (300) by operation of a gear (305a, 305b) turning within the gear shroud (310a, 30b).

## Description

### CROSS-REFERENCE TO RELATED APPLICATIONS

This patent application is related to U.S. provisional patent application serial number 62/399,067 filed on September 23, 2016 entitled "Improved Helicopter Transmission System" and U.S. provisional patent application serial number 62/423,371 filed on November 17, 2016 entitled "Improved Helicopter Transmission System," all of which is hereby incorporated by reference in its entirety.

### STATEMENT OF FEDERALLY FUNDED RESEARCH

Not applicable.

### TECHNICAL FIELD OF THE INVENTION

The present invention relates in general to the field of rotorcraft, and more particularly to methods and systems for cooling rotorcraft systems.

### BACKGROUND OF THE INVENTION

Without limiting the scope of the invention, its background is described in connection with rotorcraft drive systems.

Since their inception, rotorcraft and rotorcraft drive systems have been improved to reduce the possibility of failure during flight. Toward that end, a number of modifications have been made to drive systems to improve reliability. However, despite advances in materials and design, a number of failures continue to occur that affect rotorcraft performance. One example of a problem with current rotorcraft drive systems is that, in some instances, the failure of single drive system component leads to failure of the entire drive system. Another example is a loss of lubrication event that causes the loss of torque transmission by drive system subcomponents such as gearboxes or accessories connected to the main rotor gearbox.

More particularly, the failure of a single gearbox or shaft connected to the main rotor gearbox can significantly impact operations. For example, if there is a loss of lubrication to a gearbox, the gearbox loses torque transmission, causing damage to upstream or downstream components. The same can occur when a shaft becomes unbalanced (or breaks), which can damage couplings, gearboxes and even the main rotor gearbox. Unfortunately, when a portion of a drive system experiences a failure or reduction in performance, the concomitant reduction in power leads to challenges with flight performance.

Thus, a need remains for improving the overall safety and reliability of rotorcraft drive systems that include the connections between the engines and the main rotor gearbox, reduction and accessory gearboxes, shafts, generators, oil pumps, and accessories connected to the main rotor gearbox.

Existing methods and apparatuses for cooling and lubricating systems such as a main rotor gearbox, accessory gearboxes, and reduction gearboxes typically do not have a capacity for safe continued operation if components degrade or fail. If a lubricant or coolant is not supplied to a component or system in sufficient quantity or distributed within the component or system effectively, or if a lubricant or coolant level in a component or system falls below a critical level, the component or system may degrade or fail. Methods and apparatuses for supplying lubricants or coolants and for distributing them effectively within components and systems and for efficiently providing status information for lubricant or coolant levels in components and systems in rotorcraft are desirable.

### SUMMARY OF THE INVENTION

In some embodiments of the disclosure, an apparatus for lubrication a gearbox is disclosed as including a shroud disposed within the gearbox, operably configured for a gear of the gearbox to turn within the shroud and to distribute a lubricant within the gearbox by physical contact when turning; and a lubricant flow-metering orifice disposed in a surface of the shroud to place an interior space of the shroud in fluid communication with the lubricant for distribution within the gearbox by the gear. In one aspect, the apparatus further includes a lubricant level sight gauge disposed to display a lubricant level within the gearbox. In another aspect, the lubricant is oil. In yet another aspect, the gearbox is an accessory gearbox, a reduction gearbox, a main rotor gearbox, or a tail rotor gearbox. In another aspect, the accessory gearbox drives a hydraulic system, a permanent magnet generator, or a blower. In another aspect, the gearbox is a non-pressurized gearbox.

In some embodiments of the disclosure, a method of lubricating a gearbox is disclosed as including moving a lubricant from the gearbox into a gear shroud via a flow-metering orifice in the gear shroud; and distributing the lubricant within the gearbox by operation of a gear turning within the gear shroud. In one aspect, the method further includes returning the lubricant to a bottom of the gearbox. In another aspect, the method further includes pooling a portion of the lubricant in the gear shroud. In yet another aspect, the method further includes providing a lubricant level sight gauge disposed to display a lubricant level within the gearbox. In another aspect, the lubricant is oil. In another aspect, the gearbox is a reduction gearbox, an accessory gearbox, a main rotor gearbox, or a tail rotor gearbox. In another aspect, the accessory gearbox drives a hydraulic system, a permanent magnet generator, or a blower. In another aspect, the gearbox is a non-pressurized gearbox.

In some embodiments of the disclosure, a rotorcraft is disclosed as including a fuselage; one or more engines coupled to the fuselage; and a gearbox coupled to the one or more engines, the gearbox comprising: a shroud disposed within the gearbox, operably configured for a gear of the gearbox to turn within the shroud and to distribute a lubricant within the gearbox by physical contact when turning; and a lubricant flow-metering orifice disposed in a surface of the shroud to place an interior space of the shroud in fluid communication with the lubricant for distribution within the gearbox by the gear. In one aspect, the rotorcraft further includes a lubricant level sight gauge disposed to display a lubricant level within the gearbox. In another aspect, the lubricant is oil. In yet another aspect, the gearbox is an accessory gearbox, a reduction gearbox, a main rotor gearbox, or a tail rotor gearbox. In another aspect, the accessory gearbox drives a hydraulic system, a permanent magnet generator, or a blower. In another aspect, gearbox is a non-pressurized gearbox.

In addition to the foregoing, various other method, system, and apparatus aspects are set forth in the teachings of the present disclosure, such as the claims, text, and drawings forming a part of the present disclosure.

The foregoing is a summary and thus contains, by necessity, simplifications, generalizations, and omissions of detail. Consequently, those skilled in the art will appreciate that this summary is illustrative only and is not intended to be in any way limiting. There aspects, features, and advantages of the devices, processes, and other subject matter described herein will be become apparent in the teachings set forth herein.

### BRIEF DESCRIPTION OF THE DRAWINGS

For a more complete understanding of the features and advantages of the present invention, reference is now made to the detailed description of the invention along with the accompanying figures, in which:
**FIG. 1** shows a side view of a helicopter according to a particular embodiment of the present application;
**FIG. 2** shows a partial cross-section, perspective view of a helicopter according to an embodiment of the present application;
**FIG. 3** shows an interior view of a gearbox equipped with a lubricant flow-metering orifice and a shroud; and
**FIG. 4** depicts a flowchart of a method embodiment of the present invention which makes use of a lubricant flow-metering orifice and a shroud.

### DETAILED DESCRIPTION OF THE INVENTION

Illustrative embodiments of the system of the present application are described below. In the interest of clarity, not all features of an actual implementation are described in this specification. It will of course be appreciated that in the development of any such actual embodiment, numerous implementation-specific decisions must be made to achieve the developer's specific goals, such as compliance with system-related and business-related constraints, which will vary from one implementation to another. Moreover, it will be appreciated that such a development effort might be complex and time-consuming but would nevertheless be a routine undertaking for those of ordinary skill in the art having the benefit of this disclosure.

In the specification, reference may be made to the spatial relationships between various components and to the spatial orientation of various aspects of components as the devices are depicted in the attached drawings. However, as will be recognized by those skilled in the art after a complete reading of the present application, the devices, members, apparatuses, etc. described herein may be positioned in any desired orientation. Thus, the use of terms such as "above," "below," "upper," "lower," or other like terms to describe a spatial relationship between various components or to describe the spatial orientation of aspects of such components should be understood to describe a relative relationship between the components or a spatial orientation of aspects of such components, respectively, as the device described herein may be oriented in any desired direction.

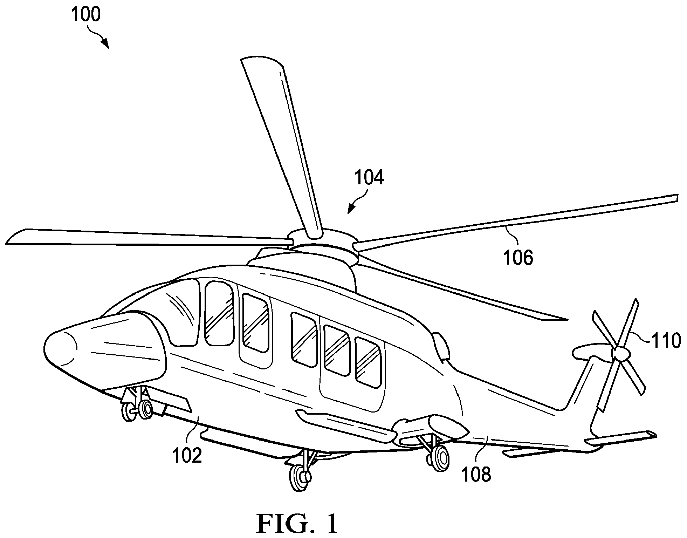

FIG. 1 shows an aircraft 100 in accordance with a preferred embodiment of the present application. In the exemplary embodiment, aircraft 100 is a helicopter having a fuselage 102 and a rotor system 104 carried thereon. A plurality of rotor blades 106 is operably associated with a rotor system 104 for creating flight. A tail boom 108 is depicted that further includes tail rotor 110.

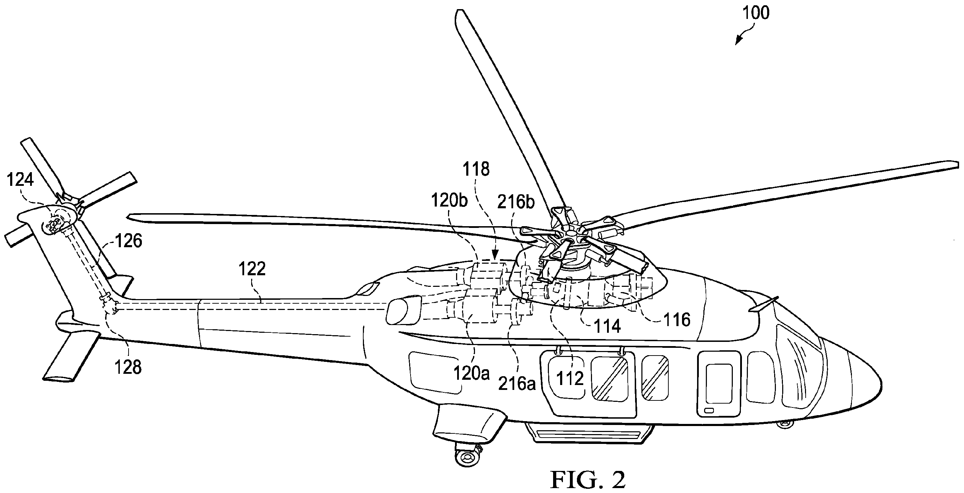

For example, FIG. 2 shows a partial cross-section perspective view of aircraft 100 that includes additional detail of the present invention. Aircraft 100 further includes a rotor mast 112, which is connected to the main rotor gearbox (MRGB) 114. The MRGB 114 is connected to one or more accessory gear boxes 116 and one or more reduction gearboxes (RGB) 216a, 216b, hydraulic pump(s) and generator(s). Each RGB 216a, 216b is connected to one or more engines 120a, 120b, which are within an engine compartment 118. A tail rotor drive shaft 122 transmits mechanical rotation to the tail rotor gearbox 124, which is connected via tail rotor drive shaft 126 and intermediate gearbox 128.

The drive system and subcomponents of aircraft 100 were developed to address the failures common to rotorcraft drive systems and is based on a completely new design and application of new technology to rotorcraft safety. More particularly, the new rotorcraft drive system is focused in an unparalleled manner on safety and redundancy. The goal of safety drove the design and development of the unique layout and configuration of the rotorcraft drive system described herein, which incorporates unique features and system separation that protects primary aircraft systems from the most common drive system failures. The drive system has also been designed to maximize the operational capability in the event of an uncommon failure, such as a loss of lubrication.

The drive system and subcomponents of aircraft 100 overcome many drive system failures by including one or more of the following design features: (1) minimize the number of single path drive system components; (2) provide maximum system separation and redundancy; (3) minimize maintenance requirements and maintenance related incidents; (4) minimize the potential of loss of lubrication events; and/or (5) maximize main rotor gearbox loss of lubrication capability. The rotorcraft drive system includes, e.g., dual engine reduction gearboxes completely isolated from the remainder of drive system via freewheeling clutches in the main rotor gearbox, dual accessory gearboxes separate from the main rotor gearbox, and the distribution of the gearbox driven accessories among the separate systems, among other improvements.

High-speed gearing and the associated heat generation is always an area of concern for gearbox survivability. The ability to continue torque transmission, particularly in a loss of lubrication scenario, is of great importance. For this reason, the drive system described herein includes two separate RGB's, each one connected to a separate engine and independent from the MRGB. The reduction gearboxes are fully self-contained and separate from each other, each reducing the engine output speed from a high speed at or near turbine engine speed of greater than 10,000 RPM to a speed substantially lower than the high speed, a low speed of less than about 6,000 RPM prior to transmitting torque to the MRGB. With this drive system arrangement high-speed gearing is contained in separate gearboxes, as such, the survivability of the total drive system is greatly enhanced, particularly in the event of high-speed gear failure or loss of lubricant in an individual RGB.

The drive system of aircraft 100 can also take advantage of a number of additional features that minimize the possibility of loss of lubricant, to maximize the operational time if a loss of lubricant event does occur. The drive system can also include one or more of the following: (1) the use of transfer tubes for cooler and filter mounting to eliminate the loss of lubricant in the event of loss of attachment fastener torque; (2) using an oil cooler mounted directly to the main rotor gearbox eliminating external hoses; (3) all oil filter bowls are screw-on instead of held-on with small fasteners eliminating fastener failure issue from repeated removals; (4) the elimination of a high speed planetary and the heat generation associated with it during a loss of lubrication event; (5) the use of gear tooth geometry specifically designed to minimize sliding reducing heat generation at the teeth and the tendency to score during a loss of lubrication event; (6) the use of coarse pitch power gears with clearance or backlash allowing for the expansion during high heat loss of lubrication events; (7) the use of high hot hardness material utilized for primary torque carrying components maximizing their continued operation during a loss of lubrication event; (8) the use of ring gear and case joint design to efficiently transmit heat away from the planetary gears in the event of a loss of lubrication event; and/or (9) the use of isotropic super finished gear teeth resulting in a greatly improved surface finish and maximizing the ability of these gears to operate in a reduced lubrication environment.

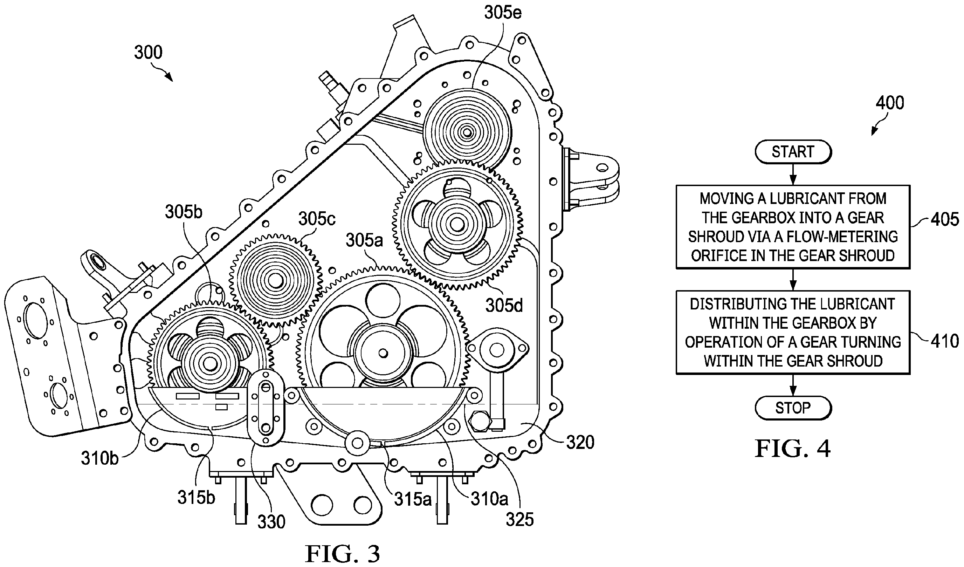

FIG. 3 depicts an interior view of an exemplary gearbox 300 of the present invention that includes an orifice in an internal gear shroud such that the action of the gear distributes (splashes) a lubricant throughout the gearbox. The present invention may be used with a variety of types of gearboxes such as accessory gearboxes, reduction gearboxes, main rotor gearboxes, or tail rotor gearboxes. Gearbox 300 is equipped with one or more gears 305a, 305b, 305c, 305d, and 305e. Gearbox 300 is also equipped with one or more gear shrouds 310a, 310b that are each configured to contain at least a portion of gears 305a, 305b, respectively. Gearbox 300 is further equipped with a lubricant flow-metering orifice 315a, which is disposed in a surface of gear shroud 310a and places an interior space of gear shroud 310a in fluid communication with a lubricant 320 for distributing the lubricant 320 within the gearbox 300 by physical contact when gear 305a is turning. In some embodiments, one or more additional lubricant flow-metering orifices 315b are disposed in the surface of gear shroud 310b and place an interior space of gear shroud 310b in fluid communication with the lubricant 320 for distributing the lubricant 320 within the gearbox 300 by physical contact when gear 305b is turning. The lubricant flow-metering orifices 315a, 315b can be one or more holes, slots or other types of openings that allow lubricant 320 to flow into an interior space of the gear shroud 310a or 310b, respectively, during operation. The lubricant flow-metering orifices 315a and/or 315b are sized to provide sufficient quantities and flow of lubricant 320 to the gear 305a and/or 305b within gear shroud 310a and/or 310b such that the gearbox 300 is not pressurized, does not require a pump, the gears 305a, 305b, 305c, 305d, and 305e are properly lubricated, and the pooled lubricant is not frothed or overly agitated, which reduces the efficiency of the lubricant.

Lubricant 320 may be oil or some other lubricating fluid and is shown pooled at the bottom of gearbox 300 (also referred to as the lubricant sump) with static level 325 while gears 305a, 305b, 305c, 305d, and 305e are not turning. When gear 305a is turning, gear 305a distributes lubricant 320 that has pooled in the interior space of shroud 310a or that has entered through lubricant flow-metering orifice 315a throughout the interior of gearbox 300 by splashing lubricant 320 through physical contact. Similarly, and as an alternative embodiment, gear 305b distributes lubricant 320 throughout the interior of the gearbox 300 by splashing lubricant 320 that has pooled in shroud 310b or that has entered shroud 310b through flow-metering orifice 315b. After being splashed throughout the interior of the gearbox 300, at least a portion of lubricant 320 settles into the bottom of the interior of gearbox 300, from which it may be returned to the interior space of shroud 310a via flow-metering orifice 315a, and optionally, to the interior space of shroud 310b via flow-metering orifice 315b. Note that the static level 325 of lubricant 320 shown in the gearbox is generally not the level of lubricant 320 within either shroud 310a or shroud 310b.

Lubricant level sight gauge 330 allows one to check on the static level 325 of lubricant 320 present when lubricant 320 is pooled at the bottom of gearbox 300, e.g., prior to starting the one or more engines 120a, 120b, or initiating rotation of the gears 305a, 305b, 305c, 305d, and 305e in gearbox 300.

An embodiment of the present invention can be used with gearbox 300 serving as an accessory gearbox, driving a number of components and systems. As illustrated in FIG. 3, gear 305a is the input put from main rotor gearbox 114. Gearbox 300 drives a hydraulic system using gear 305b, while gear 305c drives a permanent magnet generator and gear 305e drives a blower.

FIG. 4 illustrates a flowchart of a method embodiment of the present invention. Method 400 of lubricating a gearbox such as gearbox 300 includes moving lubricant from the gearbox into a gear shroud via a flow-metering orifice in the gear shroud in block 405, and distributing the lubricant within the gearbox by operation of a gear turning within the gear shroud in block 410.

The skilled artisan will recognize that lubricant flow-metering orifice 315a, 315b, gear shroud 310a, 310b, and method 400 efficiently distribute lubricant 320 within a component or system such as gearbox 300, providing effective lubrication in rotorcraft generally. The skilled artisan will also recognize that embodiments of the present invention can be used for coolants and cooling systems as well as for lubricants and lubricating systems, or for fluids that serve as coolants and lubricants and systems and methods for cooling and lubrication.

The skilled artisan will recognize that lubricant level sight gauge 330 efficiently provides information about the static level 325 of lubricant 320 in a component or system, enabling timely and efficient maintenance of lubrication systems, lubricated components and systems, and rotorcraft generally. The skilled artisan will also recognize that embodiments of the present invention can be used for coolants and cooling systems as well as for lubricants and lubricating systems, or for fluids that serve as coolants and lubricants and systems and methods for cooling and lubrication.

It will be understood that particular embodiments described herein are shown by way of illustration and not as limitations of the invention. The principal features of this invention can be employed in various embodiments without departing from the scope of the invention. Those skilled in the art will recognize, or be able to ascertain using no more than routine experimentation, numerous equivalents to the specific procedures described herein. Such equivalents are considered to be within the scope of this invention and are covered by the claims.

All publications and patent applications mentioned in the specification are indicative of the level of skill of those skilled in the art to which this invention pertains. All publications and patent applications are herein incorporated by reference to the same extent as if each individual publication or patent application was specifically and individually indicated to be incorporated by reference.

The use of the word "a" or "an" when used in conjunction with the term "comprising" in the claims and/or the specification may mean "one," but it is also consistent with the meaning of "one or more," "at least one," and "one or more than one." The use of the term "or" in the claims is used to mean "and/or" unless explicitly indicated to refer to alternatives only or the alternatives are mutually exclusive, although the disclosure supports a definition that refers to only alternatives and "and/or." Throughout this application, the term "about" is used to indicate that a value includes the inherent variation of error for the device, the method being employed to determine the value, or the variation that exists among the study subjects.

As used in this specification and claim(s), the words "comprising" (and any form of comprising, such as "comprise" and "comprises"), "having" (and any form of having, such as "have" and "has"), "including" (and any form of including, such as "includes" and "include") or "containing" (and any form of containing, such as "contains" and "contain") are inclusive or open-ended and do not exclude additional, unrecited elements or method steps. In embodiments of any of the compositions and methods provided herein, "comprising" may be replaced with "consisting essentially of' or "consisting of." As used herein, the phrase "consisting essentially of' requires the specified integer(s) or steps as well as those that do not materially affect the character or function of the claimed invention. As used herein, the term "consisting" is used to indicate the presence of the recited integer (e.g., a feature, an element, a characteristic, a property, a method/process step, or a limitation) or group of integers (e.g., feature(s), element(s), characteristic(s), property(ies), method/process(s) steps, or limitation(s)) only.

The term "or combinations thereof' as used herein refers to all permutations and combinations of the listed items preceding the term. For example, "A, B, C, or combinations thereof' is intended to include at least one of: A, B, C, AB, AC, BC, or ABC, and if order is important in a particular context, also BA, CA, CB, CBA, BCA, ACB, BAC, or CAB. Continuing with this example, expressly included are combinations that contain repeats of one or more item or term, such as BB, AAA, AB, BBC, AAABCCCC, CBBAAA, CABABB, and so forth. The skilled artisan will understand that typically there is no limit on the number of items or terms in any combination, unless otherwise apparent from the context.

As used herein, words of approximation such as, without limitation, "about," "substantial" or "substantially" refers to a condition that when so modified is understood to not necessarily be absolute or perfect but would be considered close enough to those of ordinary skill in the art to warrant designating the condition as being present. The extent to which the description may vary will depend on how great a change can be instituted and still have one of ordinary skill in the art recognize the modified feature as still having the required characteristics and capabilities of the unmodified feature. In general, but subject to the preceding discussion, a numerical value herein that is modified by a word of approximation such as "about" may vary from the stated value by at least ±1, 2, 3, 4, 5, 6, 7, 10, 12 or 15%.

All of the devices and/or methods disclosed and claimed herein can be made and executed without undue experimentation in light of the present disclosure. While the devices and/or methods of this invention have been described in terms of particular embodiments, it will be apparent to those of skill in the art that variations may be applied to the compositions and/or methods and in the steps or in the sequence of steps of the method described herein without departing from the concept, spirit and scope of the invention. All such similar substitutes and modifications apparent to those skilled in the art are deemed to be within the spirit, scope, and concept of the invention as defined by the appended claims.

Furthermore, no limitations are intended to the details of construction or design herein shown, other than as described in the claims below. It is therefore evident that the particular embodiments disclosed above may be altered or modified and all such variations are considered within the scope and spirit of the disclosure. Accordingly, the protection sought herein is as set forth in the claims below.

Modifications, additions, or omissions may be made to the systems and apparatuses described herein without departing from the scope of the invention. The components of the systems and apparatuses may be integrated or separated. Moreover, the operations of the systems and apparatuses may be performed by more, fewer, or other components. The methods may include more, fewer, or other steps. Additionally, steps may be performed in any suitable order.

To aid the Patent Office, and any readers of any patent issued on this application in interpreting the claims appended hereto, applicants wish to note that they do not intend any of the appended claims to invoke paragraph 6 of 35 U.S.C. § 112 as it exists on the date of filing hereof unless the words "means for" or "step for" are explicitly used in the particular claim.

## Claims

1. An apparatus for lubricating a gearbox, comprising:
a shroud disposed within the gearbox, operably configured for a gear of the gearbox to turn within the shroud and to distribute a lubricant within the gearbox by physical contact when turning; and
a lubricant flow-metering orifice disposed in a surface of the shroud to place an interior space of the shroud in fluid communication with the lubricant for distribution within the gearbox by the gear.

2. A rotorcraft, comprising:
a fuselage;
one or more engines coupled to the fuselage; and
a gearbox coupled to the one or more engines, the gearbox comprising:
a shroud disposed within the gearbox, operably configured for a gear of the gearbox to turn within the shroud and to distribute a lubricant within the gearbox by physical contact when turning; and
a lubricant flow-metering orifice disposed in a surface of the shroud to place an interior space of the shroud in fluid communication with the lubricant for distribution within the gearbox by the gear.

3. The apparatus of claim 1 or the rotorcraft of claim 2, further comprising a lubricant level sight gauge disposed to display a lubricant level within the gearbox.

4. The apparatus of claim 1 or of claim 3, or the rotorcraft of claim 2 or of claim 3, wherein the lubricant is oil.

5. The apparatus of claim 1 or of claim 3 or of claim 4, or the rotorcraft of claim 2 or of claim 3 or of claim 4, wherein the gearbox is an accessory gearbox, a reduction gearbox, a main rotor gearbox, or a tail rotor gearbox.

6. The apparatus or rotorcraft of claim 5, wherein the accessory gearbox drives a hydraulic system, a permanent magnet generator, or a blower.

7. The apparatus of claim 1 or of any of claims 3 to 6, or the rotorcraft of claim 2 or of any of claims 3 to 6, wherein the gearbox is a non-pressurized gearbox.

8. A method of lubricating a gearbox, comprising:
moving a lubricant from the gearbox into a gear shroud via a flow-metering orifice in the gear shroud; and
distributing the lubricant within the gearbox by operation of a gear turning within the gear shroud.

9. The method of claim 8, further comprising returning the lubricant to a bottom of the gearbox.

10. The method of claim 8 or of claim 9, further comprising pooling a portion of the lubricant in the gear shroud.

11. The method of claim 8 or of claim 9 or of claim 10, further comprising providing a lubricant level sight gauge disposed to display a lubricant level within the gearbox.

12. The method of claim 8 or of any preceding method claim, wherein the lubricant is oil.

13. The method of claim 8 or of any preceding method claim, wherein the gearbox is a reduction gearbox, an accessory gearbox, a main rotor gearbox, or a tail rotor gearbox.

14. The method of claim 13, wherein the accessory gearbox drives a hydraulic system, a permanent magnet generator, or a blower.

15. The method of claim 8 or of any preceding method claim, wherein the gearbox is a non-pressurized gearbox.
